# EUROPEAN PATENT SPECIFICATION

(11) **EP 1 555 301 B1**
(45) Date of publication and mention of the grant of the patent: **12.09.2007**
(21) Application number: 04027331.0
(22) Date of filing: 17.11.2004
(51) Int. Cl.: C09D 11/16

(54) **Watercolor ink composition for writing utensils and method for producing it**
Wässrige Tinte für Schreibgeräte und Produktionsmethode für diese Tinte
Encre aqueuse pour instruments d' écriture et méthode de production pour l' encre

(30) Priority: 15.01.2004 JP 2004008318
(43) Date of publication of application: 20.07.2005
(73) Proprietor: TOMBOW PENCIL CO., LTD., Tokyo 114-8583 (JP)
(72) Inventor: Uchida, Tatsumi, 4-7-6-303 Yahara Nerimaku Tokyo 177-0032 (JP)
(74) Representative: Schmidt, Horst

(56) References cited:
- EP-A- 0 322 805
- EP-A- 0 621 324
- US-A- 4 260 531
- US-A- 4 460 727
- US-A- 5 131 776
- US-A- 5 859 092
- US-A- 6 160 034
- PATENT ABSTRACTS OF JAPAN vol. 1995, no. 04, 31 May 1995 (1995-05-31) & JP 07 018212 A (TOYO INK MFG CO LTD), 20 January 1995 (1995-01-20)

## Description

### FIELD OF THE INVENTION

The present invention relates to a watercolor ink composition for writing utensils having colored or colorless transparency in appearance and particularly to a watercolor ink composition for writing utensils having both transparent feeling and solid feeling in handwriting drawn by use of the ink compositions. The invention further relates to a method for producing such watercolor ink composition for writing utensils.

### DESCRIPTION OF THE RELATED ART

In the field of posters, illustrations, or ornaments, handwriting having a feeling of building up wherein the handwriting is swollen out has hitherto been expected in some cases, and various ink compositions have been proposed in order to realize such handwriting. For example, patent literature 1 demonstrates paints for building up characterized by mixing clay acting as a main component in order to build up, clay which is dissolved in water and allowed to stand for a prescribed period of time, an acrylic paint for staining that is dissolved in ethyl alcohol, a bonding material to heighten conformability and adhesion between base and paint, and slip comprising fine particles for surface finish. Patent literature 2 demonstrates emulsion inks for stencil printing characterized in that in a water-in-oil type emulsion comprising an oil phase and a water phase, an oil-in-water type resin emulsion is used as the above water phase. And the patent literature describes that characters printed by use of the emulsion ink for stencil printing have the feeling of building up. Furthermore, patent literature 3 discloses paint ink compositions characterized by use of paraffin as a binder and describes that thick coating with the paint ink enables solid expression and ornament having a solid feeling.
[Patent literature 1] JP-A-3-290473
[Patent literature 2] JP-A-6-220382
[Patent literature 3] JP-A-2002-285066

However, these ink compositions lack transparency, and watercolor ink compositions for writing utensils that have colored or colorless transparency in appearance and leave handwriting having both transparent feeling and solid feeling have not been realized yet.

### SUMMARY OF THE INVENTION

The invention aims at providing watercolor ink compositions for writing utensils that have colored or colorless transparency in appearance and have both transparent feeling and solid feeling in handwriting.

The present inventors have intensively studied in order to solve the above-described problems and as a result, found that when watercolor ink compositions for writing utensils comprise at least an alkali-soluble acrylic copolymer, a lower alcohol solvent, water, and a coloring material wherein the alkali-soluble acrylic copolymer has a molecular weight of from 7000 to 15,000, an acid value of from 30 to 100, and a glass transition point of from -10 to 60°C, the watercolor ink compositions for writing utensils that have colored or colorless transparency in appearance and have both transparent feeling and solid feeling in handwriting can be provided, thus having achieved the invention.

That is, the watercolor ink compositions for writing utensils of the invention have colored or colorless transparency in appearance and have both transparent feeling and solid feeling in handwriting.

### DETAILED DESCRIPTION OF THE INVENTION

The invention is illustrated in detail.

The alkali-soluble acrylic copolymers used in the invention are copolymers that are prepared by copolymerizing appropriately acrylic esters, styrene, acrylic acid, maleic acid, methacrylic acid, or the like, have acidic groups such as carboxyl group in molecule, and are dissolved in water in the coexistence with alkaline substances. In the invention, the alkali-soluble acrylic copolymers having molecular weights of from 7000 to 15,000, acid values of from 30 to 100, and glass transition points of from -10 to 60°C are added and used in a ratio of from 20 to 55 weight percent. Examples of such copolymers include acrylic acid-methacrylic ester copolymers, polyacrylic ester copolymers, acrylic acid-styrene copolymers, maleic acid-styrene copolymer, and the like and these copolymers can be used singly or as mixtures of two or more thereof. The molecular weights less than 7000 lead to too low viscosity to make it difficult to obtain solid writing lines and moreover to fix handwriting itself. Exceeding 15,000 results in increasing remarkably the viscosity of ink even by addition of a small amount of the copolymers, making it difficult to add a sufficient amount thereof and to obtain a sufficient solid feeling, and moreover causing deterioration in fluidity.

The alkali-soluble acrylic copolymers used in the invention have acid values of from 30 to 100. The acid values less than 30 make it difficult to dissolve in ink solvent to cause turbidity and mar the transparent feeling. Exceeding 100 leads to deterioration in resistance to water and causes remarkable stringing on writing.

Furthermore, the alkali-soluble acrylic copolymers used in the invention have glass transition points of from -10 to 60°C. The glass transition point less than -10°C causes stickiness in handwriting after drying, and exceeding 60°C results in causing cracking in handwriting after drying.

The amount of the above-described alkali-soluble acrylic copolymers to be used in the total amount of ink is from 20 to 55 weight percent. The amount less than 20 weight percent results in too insufficient amount of resin components left after drying handwriting for drawing solid lines. Exceeding 55 weight percent causes remarkable increase in the viscosity of ink, leading to deterioration in fluidity. Although one or two or more of lower amines that form gases at 20°C, that is, ammonia, monomethylamine, monoethylamine, dimethylamine, and trimethylamine, are used as the alkaline substances to solubilize the resins, ammonia is desirable in view of quick drying. The alkaline substances are desirably added so as to adjust to pH 7 to 10 to dissolve the resins.

The solvents used in the invention are mixtures of water and lower alcohol solvents, and the ratio of water to the total ink solvent is from 20 to 80 weight percent. The amount less than 20 weight percent promotes penetration of the ink into paper, though depending upon the kind of paper, to make it difficult to draw solid lines. Exceeding 80 weight percent makes dissolution of the resins difficult though depending upon the acid value. Examples of the alcoholic solvents include ethanol, isopropyl alcohol, n-propyl alcohol, propylene glycol monomethyl ether, and the like. These solvents can be used singly or mixtures of two or more thereof.
As coloring materials used in the invention, dyes or pigments for ordinary alcohol-series and water-series inks can be used for staining to an extent that appearance of the ink loses no transparency, and specific examples thereof include water- and alcohol-soluble ones, direct dyes such as C.I. Direct Yellow 44, C.I. Direct Yellow 50, C.I. Direct Red 84, C.I. Direct Red 225, C.I. Direct Violet 9, C.I. Direct Blue 2, and C.I. Direct Green 30, basic dyes such as C.I. Basic Yellow 25, C.I. Basic Orange 2, C.I. Basic Red 9, C.I. Basic Violet 3, C.I. Basic Blue 1, and C.I. Basic Blue 9, acid dyes such as C.I. Acid Yellow 1, C.I. Acid Yellow 7, C.I. Acid Orange 7, C.I. Acid Red 1, C.I. Acid Red 13, C.I. Acid Red 87, C.I. Acid Violet 7, C.I. Acid Blue 7, C.I. Acid Blue 9, C.I. Acid Blue 74, C.I. Acid Blue 90, C.I. Acid Green 7, C.I. Acid Green 16, and C.I. Acid Brown 39, or alcohol-soluble dyes, C.I. Solvent Black 5, C.I. Solvent Black 7, C.I. Solvent Blue 5, C.I. Solvent Blue 12, C.I. Solvent Blue 25, C.I. Solvent Blue 38, C.I. Solvent Blue 70, C.I. Solvent Red 1, C.I. Solvent Red 8, C.I. Solvent Red 23, C.I. Solvent Red 82, C.I. Solvent Yellow 6, C.I. Solvent Yellow 21, C.I. Solvent Yellow 56, C.I. Solvent Yellow 61, C.I. Solvent Orange 45, C.I. Solvent Violet 21, C.I. Solvent Green 3, and C.I. Solvent Brown 20, and dyes such as fluorescent dyes which are used singly or as mixtures of one or two or more thereof. Moreover, inorganic pigments such as carbon black and titanium dioxide that is a white pigment, organic pigments, fluorescent pigments, and light-storing pigments such as phthalocyanine blue, (C.I. 74160), phthalocyanine green (C.I. 74260), disazo yellow GR (C.I. 21100), permanent red 4R (C.I. 12335), and brilliant carmine 6B (C.I. 15850) can be used singly or as mixtures of two or more thereof.

Moreover, in addition to the above-described components, known additives used for watercolor ink compositions for writing utensils can be used as needed for the ink compositions of the invention, and examples thereof include dispersants, thickeners, wetting agents, high-boiling organic solvents, preservatives, rust preventives, and the like.

In the invention, the above-described ink compositions are mixed and stirred with a known agitator at temperatures of from room temperatures to about 50 or about 60°C to prepare watercolor inks for writing utensils. The resulting watercolor inks for writing utensils are colorless or transparent and handwriting drawn by use of the inks has both transparent feeling and solid feeling. The transparent feeling of handwriting means that the film formed has no haze to transmit light, and more specifically that colors of paper which handwriting is written on or characters beforehand written are visible through handwriting drawn with the present writing utensils. And the solid feeling means the condition where the film of handwriting portions swells out after drying.

### EXAMPLES

The present invention is more specifically illustrated through examples and comparative examples. The invention is not to be construed as limited by the examples. Parts mean weight parts and wt-% means weight percent.

### EXAMPLE 1

A watercolor ink composition comprising 99.9 wt-% of water-alcohol solution of acrylic acid-methacrylate ester copolymer and 0.1 wt% of C.I. Solvent Blue 38 was manufactured.

The water-alcohol solution of acrylic acid-methacrylate ester copolymer had the following composition.

| | |
|---|---|
| Acrylic acid-methacrylate ester copolymer (Molecular weight 10,900, Acid value 59.5, Tg 20.0°C) | 48.1 parts |
| Ethanol | 32.3 parts |
| Isopropyl alcohol | 1.9 parts |
| n-Propyl alcohol | 2.6 parts |
| Ion-exchanged water | 13.0 parts |
| Aqueous ammonia (28 wt%) | 2.0 parts |

### EXAMPLE 2

A watercolor ink composition having the following composition was manufactured.

| | |
|---|---|
| Aqueous solution of polyacrylate ester copolymer (Molecular weight 13,900, Acid value 76.5, Tg -7.5°C) | 74.6 wt-% |
| Ethanol | 20.3 wt-% |
| Propylene glycol monomethyl ether | 4.9 wt-% |
| C.I. Acid Blue 90 | 0.2 wt-% |

The aqueous solution of polyacrylate ester copolymer had the following composition

| | |
|---|---|
| Polyacrylate ester copolymer | 35.8 parts |
| Ion-exchanged water | 36.0 parts |
| Aqueous ammonia (28 wt%) | 2.8 parts |

### COMPARATIVE EXAMPLE 1

The amount of the aqueous solution of polyacrylate ester copolymer used in Example 2 was decreased to half amount herein and the decreased amount was supplemented with the same amount of ion-exchanged water.

### EXAMPLE 3

A watercolor ink composition having the following composition was manufactured.

| | |
|---|---|
| Acrylic acid-styrene copolymer (Molecular weight 8500, Acid value 73.0, Tg 40.0°C) | 30.0 wt-% |
| Ethanol | 10.0 wt-% |
| Isopropyl alcohol | 5.9 wt-% |
| Ion-exchanged water | 52.0 wt-% |
| Monomethylamine | 1.9 wt-% |
| C.I. Acid Red 87 | 0.2 wt-% |

### COMPARATIVE EXAMPLE 2

The ion-exchanged water used in Example 3 was decreased to 10.0 wt% herein and the decreased amount was supplemented with the same amount of isopropyl alcohol.

### COMPARATIVE EXAMPLE 3

The amount of the resin in Example 3 was doubled herein and the increased amount was decreased in amount of ion-exchanged water.

### COMPARATIVE EXAMPLE 4

A watercolor ink composition having the following composition was manufactured.

| | |
|---|---|
| Acrylic acid-styrene copolymer (Molecular weight 8500, Acid value 200.0, Tg 85.0°C) | 34.0 wt-% |
| Ethanol | 8.0 wt% |
| Isopropyl alcohol | 5.9 wt-% |
| Ion-exchanged water | 47.2 wt-% |
| Aqueous ammonia (28 wt%) | 4.8 wt-% |
| Fluorescent pigment | 0.1 wt-% |

### COMPARATIVE EXAMPLE 5

| | |
|---|---|
| Alcoholic solution of acrylic acid-methacrylate ester copolymer (Molecular weight 52,200, Acid value 78.8, Tg 1.7°C) | 99.9 wt-% |
| C.I. Solvent Blue 38 | 0.1 wt-% |

The alcoholic solution of acrylic acid-methacrylate ester copolymer had the following composition.

| | |
|---|---|
| Acrylic acid-methacrylate ester copolymer | 48.1 parts |
| Ethanol | 47.3 parts |
| Isopropyl alcohol | 1.9 parts |
| n-Propyl alcohol | 2.6 parts |

### COMPARATIVE EXAMPLE 6

The aqueous solution of polyacrylate ester copolymer (Molecular weight 13,900, Acid value 76.5, Tg -7.5°C) in Example 2 was replaced by an emulsion (Ratio of resin to emulsion 45.5 wt-%) of polyacrylate ester copolymer (Molecular weight 24,000, Acid value 19.0, and Tg -15.0°C).

### COMPARATIVE EXAMPLE 7

The acrylic acid-styrene copolymer (Molecular weight 8500, Acid value 73.0, Tg 40.0°C) in Example 3 was replaced by an acrylic acid-styrene copolymer (Molecular weight 4600, Acid value 108.0, Tg 60.0°C).

In Examples 1 to 3 and Comparative Examples 1 to 7, the amounts of the respective components were measured and the components were stirred with a known agitator at temperatures of from 50°C to 60°C for about two hours and dissolved.
Qualities of the resulting products were measured according to the following methods. Results are shown in Table 1.
(1) Transparency of ink: The respective inks were put in a transparent glass bottle and the transparency of appearance was graded with ○ or × by inspection with the naked eye.
(2) Transparent feeling and solid feeling of handwriting: Inks prepared in Examples 1 to 3 and Comparative Examples 1 to 7 were put in extremely narrow corrective pen vessels of this company to obtain writing utensils. Glass plates underwent spiral writing by handwriting with the writing utensils obtained, and the transparency of handwriting, that is, the presence or absence of hazes, and the solid feeling were graded with ○ or × by inspection with the naked eye.

**[Table 1]**

| | Transparency of Ink | Transparent Feeling of Handwriting | Solid Feeling of Handwriting |
|---|---|---|---|
| Example 1 | ○ | ○ | ○ |
| Example 2 | ○ | ○ | ○ |
| Example 3 | ○ | ○ | ○ |
| Comparative Example 1 | ○ | ○ | × |
| Comparative Example 2 | ○ | ○ | × |
| Comparative Example 3 | Because of marked increase in viscosity, preparation of inks was Impossible | | |
| Comparative Example 4 | ○ | × | × Cracking occurred on handwriting after drying |
| Comparative ve Example 5 | ○ | Because of high viscosity of ink, handwriting was impossible | |
| Comparative Example 6 | × | × | ○ |
| Comparative Example 7 | ○ | ○ | × |

Results as shown in Table 1 reveal that in the watercolor ink compositions for writing utensils comprising at least an alkali-soluble acrylic copolymer, a lower alcohol solvent, water, and a coloring material wherein the alkali-soluble acrylic copolymer has a molecular weight of from 7000 to 15,000 an acid value of from 30 to 100, and a glass transition point of from -10 to 60°C, the appearance of the ink compositions has colored or colorless transparency and the handwriting thereof has both transparent feeling and solid feeling.

From the disclosure given, those skilled in the art will not only understand the present invention and the attendant advantages, but will also find apparent various changes and modifications to the compositions and examples disclosed. It is sought, therefore, to cover all such changes and modifications as within the spirit and scope of the invention, as defined by the appended claims, and equivalents thereof.

## Claims

1. A watercolor ink composition for writing utensils comprising at least an alkali-soluble acrylic copolymer, a lower alcohol solvent, water, and a coloring material wherein the alkali-soluble acrylic copolymer has a molecular weight of from 7000 to 15,000, an acid value of from 30 to 100, and a glass transition point of from -10 to 60°C.

2. The composition as described in claim 1, wherein the amount of the alkali-soluble acrylic copolymer contained in the total amount of ink is from 20 to 55 weight percent.

3. The composition as described in claim 1, wherein water accounts for 20 weight percent or more and 80 weight percent or less of the total amount of ink solvents and a water-soluble lower alcohol solvent accounts for the residual amount.

4. A method of producing a watercolor ink composition for writing utensils including the step of stirring at least an alkali-soluble acrylic copolymer having a molecular weight of between 7000 and 15.000, an acid value between 30 and 100, and a glass transition point of between -10° and 60°C, a lower alcohol solvent, water, and a coloring material, at a temperature between room temperature and about 60°, preferably between room temperature and about 50°.

5. The method as described in claim 4, wherein said alkali-soluble acrylic copolymer is provided by copolymerizing a number of polymers selected from a group comprising acrylic esters, styrene, acrylic acid, maleic acid, methacrylic acid, or the like, having acidic groups such as carboxyl group in molecule, and dissolving it in water in the coexistence with alkaline substances.

6. The method as described in claim 4, wherein said lower alcohol solvent is selected from a group comprising ethanol, isopropyl alcohol, n-propyl alcohol, propylene glycol monomethyl ether, and a mixture thereof.

7. The method as described in claim 4, wherein said coloring material is selected from a group comprising pigments for ordinary alcohol-series, and water-series inks.

8. The method as described in claim 4, wherein the amount of said alkali-soluble acrylic copolymer in the watercolor ink composition is between 20 and 55 weigth percent.

9. The method as described in claim 4, wherein between 20 and 80 weight percent of said water is in a mixture of said water and said lower alcohol solvent.

10. The method as described in claim 4, wherein at least an additive selected from the group comprising dispersants, thickeners, wetting agents, high-boiling organic solvents, preservatives, rust preventives, is added to the watercolor ink compositions.

## Patentansprüche

1. Wasserfarben-Tintenzusammensetzung für Schreibgeräte, umfassend mindestens ein alkalilösliches Acrylcopolymeres, ein Niederalkohol-Lösungsmittel, Wasser und ein farbgebendes Material, wobei das alkalilösliche Acrylcopolymere ein Molekulargewicht von 7000 bis 15 000, eine Säurezahl von 30 bis 100 und einen Glasübergangspunkt von -10 bis 60 °C aufweist.

2. Zusammensetzung nach Anspruch 1, wobei die Menge des alkalilöslichen Acrylcopolymeren, die in der Gesamtmenge der Tinte enthalten ist, 20 bis 55 Gew.-% beträgt.

3. Zusammensetzung nach Anspruch 1, wobei das Wasser 20 Gew.-% oder mehr und 80 Gew.-% oder weniger der Gesamtmenge der Tintenlösungsmittel ausmacht und ein wasserlösliches Niederalkohol-Lösungsmittel die restliche Menge ausmacht.

4. Verfahren zur Herstellung einer Wasserfarben-Tintenzusammensetzung für Schreibgeräte, umfassend die Stufe, bei der man mindestens ein alkalilösliches Acrylcopolymeres mit einem Molekulargewicht von 7000 bis 15 000, einer Säurezahl von 30 bis 100 und einem Glasübergangspunkt von -10 bis 60 °C, ein Niederalkohol-Lösungsmittel, Wasser und ein farbgebendes Material bei einer Temperatur von Raumtemperatur bis etwa 60 °C und vorzugsweise von Raumtemperatur bis etwa 50 °C rührt.

5. Verfahren nach Anspruch 4, wobei das alkalilösliche Acrylcopolymere durch Copolymerisieren einer Anzahl von Polymeren, die aus einer Gruppe ausgewählt sind, die Acrylester, Styrol, Acrylsäure, Maleinsäure, Methacrylsäure oder dergl. mit sauren Gruppen, z. B. Carboxylgruppen, im Molekül umfasst, und durch Lösen des Produkts in Wasser bei gleichzeitigem Vorliegen von alkalischen Substanzen bereitgestellt wird.

6. Verfahren nach Anspruch 4, wobei der niedere Alkohol als Lösungsmittel aus einer Gruppe ausgewählt wird, die Ethanol, Isopropylalkohol, n-Propylalkohol, Propylenglycol, Monomethylether und ein Gemisch davon umfasst.

7. Verfahren nach Anspruch 4, wobei das farbgebende Material aus einer Gruppe ausgewählt wird, die Pigmente für übliche Tinten auf Alkoholbasis und Wasserbasis umfasst.

8. Verfahren nach Anspruch 4, wobei die Menge des alkalilöslichen Acrylcopolymeren in der Wasserfarben-Tintenzusammensetzung 20 bis 55 Gew.-% beträgt.

9. Verfahren nach Anspruch 4, wobei 20 bis 80 Gew.-% Wasser im Gemisch aus Wasser und dem Niederalkohol-Lösungsmittel vorliegen.

10. Verfahren nach Anspruch 4, wobei mindestens ein Additiv, das aus der Gruppe ausgewählt wird, die Dispergiermittel, Verdickungsmittel, Netzmittel, hochsiedende organische Lösungsmittel, Konservierungsmittel und Rostschutzmittel umfasst, den Wasserfarben-Tintenzusammensetzungen zugesetzt wird.

## Revendications

1. Composition d'encre de couleur aqueuse ou à l'eau destinée à des instruments d'écriture comprenant au moins un copolymère acrylique soluble dans un liquide basique, un solvant alcoolique inférieur, de l'eau et un matériau de coloration dans laquelle le copolymère acrylique soluble dans un liquide basique présente une masse moléculaire comprise entre 7 000 et 15 000, un indice d'acidité compris entre 30 et 100 et une température de transition vitreuse comprise entre -10 et 60 °C.

2. Composition selon la revendication 1, dans laquelle la proportion du copolymère acrylique soluble dans un liquide basique contenue dans la quantité totale d'encre est de 20 à 55 pour cent en poids.

3. Composition selon la revendication 1, dans laquelle l'eau représente 20 pour cent en poids ou plus et 80 pour cent en poids ou moins de la quantité totale de solvants d'encre et un solvant alcoolique inférieur soluble dans l'eau représente la quantité restante.

4. Procédé de production d'une composition d'encre de couleur aqueuse ou à l'eau pour des instruments d'écriture comprenant l'étape consistant à agiter au moins un copolymère acrylique soluble dans un liquide basique présentant une masse moléculaire comprise entre 7 000 et 15 000, un indice d'acidité comprise entre 30 et 100 et une température de transition vitreuse comprise entre -10 et 60 °C, un solvant alcoolique inférieur, de l'eau et un matériau de coloration, à une température comprise entre la température ambiante et environ 60 °C, de préférence entre la température ambiante et environ 50°C.

5. Procédé selon la revendication 4, dans lequel ledit copolymère acrylique soluble dans un liquide basique est fourni par copolymérisation d'un certain nombre de polymères sélectionnés à partir d'un groupe comprenant des esters acryliques, le styrène, l'acide acrylique, l'acide maléique, l'acide méthacrylique ou autres, présentant des groupements acides tels qu'un groupement carboxyle dans une molécule, et par dissolution de celui-ci dans de l'eau en présence de substances alcalines.

6. Procédé selon la revendication 4, dans lequel ledit solvant alcoolique inférieur est sélectionné à partir d'un groupe comprenant l'éthanol, l'alcool isopropylique, l'alcool n-propylique, l'éther de monométhyle de propylèneglycol et un mélange de ceux-ci.

7. Procédé selon la revendication 4, dans lequel ledit matériau de coloration est sélectionné à partir d'un groupe comprenant des pigments destinés à des encres de séries alcooliques et de séries aqueuses ordinaires.

8. Procédé selon la revendication 4, dans lequel la proportion dudit copolymère acrylique soluble dans un liquide basique dans la composition d'encre de couleur aqueuse est comprise entre 20 et 55 pour cent en poids.

9. Procédé selon la revendication 4, dans lequel entre 20 et 80 pour cent en poids de ladite eau se trouvent dans un mélange de ladite eau et dudit solvant alcoolique inférieur.

10. Procédé selon la revendication 4, dans lequel au moins un additif sélectionné à partir du groupe comprenant des dispersants, des épaississants, des agents de mouillage, des solvants organiques à point d'ébullition élevé, des conservateurs, des conservateurs contre la rouille, est ajouté aux compositions d'encres de couleur aqueuse.
